(19) Europäisches Patentamt
European Patent Office
Office européen des brevets

(11) Publication number: **0 315 234 A1**

# (12) EUROPEAN PATENT APPLICATION

(21) Application number: 88202263.5

(22) Date of filing: 11.10.88

(51) Int. Cl.4: C07F 5/06, C08F 4/60, C08F 10/00

(30) Priority: 26.10.87 US 112341

(43) Date of publication of application: 10.05.89 Bulletin 89/19

(84) Designated Contracting States: BE DE FR GB IT NL

(71) Applicant: TEXAS ALKYLS, INC.
730 Battleground Road
Deer Park Texas 77536(US)

(72) Inventor: Malpass, Dennis Benedict
10320 Rocky Hollow Road
La Porte Texas 77571(US)
Inventor: Piotrowski, Andrzej Mieczyslaw
84 Kensico Road
Thornwood New York 10594(US)

(74) Representative: Sieders, René et al
AKZO N.V. Patent Department (Dept. CO)
P.O. Box 9300
NL-6800 SB Arnhem(NL)

## (54) Process for preparation of aluminoxanes.

(57) Aluminoxanes, useful as olefin polymerization cocatalysts, are formed by admixture of an organoaluminum compound, a water-containing inert, porous absorbent, and an organic solvent. As the absorbent releases the absorbed water, it reacts with the organoaluminum compound thereby forming the aluminoxane.

EP 0 315 234 A1

# PROCESS FOR PREPARATION OF ALUMINOXANES

## BACKGROUND OF THE INVENTION

The present invention relates to the preparation of aluminoxanes which find utility as cocatalysts in olefin polymerization.

### Description of the Prior Art

It is known to utilize aluminoxanes as cocatalysts in the polymerization of polyolefins, such as ethylene (see U. S. Patent Nos. 4,542,199 and 4,552,859).

G. A. Razuvaev et al. describes the synthesis of aluminoxanes by reaction of organoaluminum compounds with copper (II) sulfate crystal hydrate (see Chemical Abstracts, Vol. 84, 59627x, 1976) and S. R. Rafikov et al. describe treatment of organoaluminum compounds with a crystal hydrate salt in an organic solvent. More recently, this general line of synthesis was further elucidated by U.S. Patent No. 4,544,762 which described the use of various aluminum salts containing water of crystallization, including $Al_2(SO_4)_3.18H_2O$, $AlCl_3.6H_2O$, $Al(NO_3)_3.9H_2O$, and $Al_2(SO_4)_3.16H_2O$. More recently, U.S. Patent No. 4,665,208 to H. C. Welborn, Jr. et al. issued which enumerates the use of the magnesium, zinc, sodium and iron salt hydrates in forming aluminoxanes when combined with alkylaluminum compounds, such as trimethylaluminum.

## SUMMARY OF THE PRESENT INVENTION

The present invention relates to preparation of aluminoxanes by the action of water on organoaluminum compounds wherein the source of the water is an inert, porous absorbent which contains absorbed water which is releasibly held therein. When the organoaluminum compound and inert, porous absorbent containing the water are brought together, preferably in an organic solvent medium, the water is released and reacts with the organoaluminum compound to form the desired aluminoxane.

## DETAILED DESCRIPTION OF THE INVENTION

The aluminoxanes which can be made by the present invention include those oligomeric, linear and/or cyclic hydrocarbyl aluminoxanes known to the art and described, for example, in U.S. Patent Nos. 4,544,762 and 4,665,208. They may be represented by the following formulae:

$$R - (\underset{\displaystyle R}{\underset{|}{Al}}-O)_n - AlR_2$$

$$-(\underset{\displaystyle R}{\underset{|}{Al}}-O)-_m$$

where n can be 1-40 (preferably 10-20), m can be 3-40 (preferably 3-20), and R is a $C_1$-$C_8$ alkyl group (preferably methyl).

The organoaluminum compounds which can be used as one of the reagents herein are also those known to persons in the art. They include the trialkyl or triarylaluminum compounds which can contain $C_1$-$C_8$ alkyl moieties or $C_6$-$C_{10}$ aryl moieties. The trialkylaluminum compounds are preferred with trimethylaluminum being most preferred.

The reaction is carried out, most preferably, in an aromatic or saturated aliphatic hydrocarbon solvent, such as heptane, toluene, cyclohexane, or the like.

In accordance with the present invention, the water needed for the desired reaction is carried by an inert, porous absorbent for such water. Examples of suitable, water-absorbing materials, which are non-reactive with organoaluminum compounds and capable of releasing the absorbed water, include fumed silica, aluminum hydroxide, diatomaceous earth, and the like. The amount of water releasibly absorbed by these materials can range from about 10% to about 50%, by weight of the material. The water is not bound by these materials, as is true in the cases of metal salts having water of crystallization, but is mainly physically absorbed therein and thereon.

The weight ratio of solvent to organoaluminum compound can range from about 3:1 to about 10:1, whereas the ratio, by weight, of solvent to water-containing absorbent can range from about 4:1 to about 10:1. The weight ratio of absorbent to organoaluminum compound can range from about 1:2 to about 2.5:1.

The admixture of organoaluminum compound, water-containing absorbent, and, preferably, solvent is preferably allowed to remain at a suitable reaction temperature (e.g., at or under about 40 °C) for a sufficient length of time to allow for release of the absorbed water from the porous material and reaction of it with the organoaluminum compound to form the aluminoxane which can be purified, filtered, or otherwise obtain either as a solid or solution. The oligomeric aluminoxanes thus formed are useful as cocatalysts in olefin polymerization.

The present invention is further illustrated by the following Examples.

## GENERAL PROCEDURES

All preparations and reactions involving air- and moisture-sensitive organometallic compounds were conducted under an atmosphere of dry, oxygen-free nitrogen according to published procedures.

## EXAMPLE 1

Trimethylaluminum (TMAL) (129.0 grams) was dissolved in toluene to form about 1 liter of solution (5.47 weight percent Al). The solution was chilled to -5 °C. Aluminum hydroxide (38.0 grams) was combined with 14.0 grams of water forming a fluffy solid which was added to the chilled TMAL solution over a period of 8 hours. The resulting slurry was stirred overnight while the temperature was allowed to rise to 26 °C. The slurry was then decanted and the clear supernatant was analyzed for soluble aluminum content. It was found that 56.7% of the initial aluminum remained in solution (3.10 weight percent Al).

## EXAMPLE 2

TMAL (83.4 grams) was dissolved in 500 milliliters of toluene and the solution was chilled to -5 °C. Aluminum hydroxide (24.0 grams) was combined with 11.0 grams of water and the mixture was suspended in 300 milliliters of toluene. 250 milliliters of the resulting suspension was pumped into a chilled TMAL solution over a period of 6 hours. At this point, 26 liters of gas were evolved (1 molar equivalent relative to aluminum charged). The reaction mixture was gradually warmed to room temperature and left agitated overnight. The stirrer was stopped and solids were allowed to settle. Out of 850 milliliters of this prepared slurry, 700 milliliters were free of solids. A 150 milliliter sample of the supernatant was taken and analyzed for aluminum content (3.28 weight percent Al was found).

## EXAMPLE 3

The aluminoxane solution from Example 2 (remaining solution and suspended solids) was chilled to -10 °C and 150 milliliters of hydrated aluminum hydroxide slurry in toluene (15.0 grams of $Al(OH)_3$ to which was added 6.6 grams of water) were added over a period of 4 hours. The reaction mixture was then stirred overnight at room temperature. An additional 19 liters of gas were evolved at this point. The stirrer was turned off and solids were allowed to settle. A sample of clear supernatant was analyzed and 1.38% Al was

found.

## EXAMPLE 4

TMAL (329.5 grams) was dissolved in 1015 grams of toluene and the solution was chilled to -10 ° C. The solution was stirred with a mechanical stirrer at 900 rpm and a suspension of aluminum hydroxide (102 grams) saturated with water (48 grams) in 1213 grams of toluene was pumped over a period of 7 hours. During the addition, the temperature was controlled at -10 ° C (±5 ° C). The reaction mixture was then decanted and the supernatant was found to contain 3.07 weight percent Al, which is equivalent to 64.5% of the initial aluminum charged.

## EXAMPLE 5

TMAL (15.0 grams) was dissolved in toluene to form 110 milliliters of solution. The solution was then transferred into a glass reactor equipped with a very efficient stirrer. The reactor was then submerged in a cold bath and its contents were cooled to -40 ° C. At this point a suspension of aluminum hydroxide (7.0 grams) saturated with water (3.0 grams) in 70 milliliters of toluene was added over a period of 2 hours. The reaction mixture temperature was kept at -40 ° C (±2 ° C) at the beginning of the addition and at -30 ° C (± 3 ° C) at the end of the addition. Then the reaction mixture was warmed to room temperature over a 0.5 hour period and stirred at this temperature for 2 hours. The stirrer was turned off and solids were allowed to settle. Out of 200 milliliters of this slurry, 160 milliliters were free of solids and contained 2.35 weight percent Al, which is equivalent to 73.3% of the initial aluminum charged.

## EXAMPLE 6

TMAL (52.34 grams) was dissolved in toluene to form 268.74 grams of solution. The solution was chilled to -35 ° C and a suspension of 30.73 grams of silica (Davison catalyst grade containing 11.33 grams of water) in 180 milliliters of toluene was added over a period of 3 hours. The reaction mixture was allowed to warm to room temperature over a period of 1 hour. After 17 additional hours of stirring, solids were allowed to settle and supernatant was found to contain 2.80 weight percent Al which is equivalent to 61.0% of the initial aluminum charged.

## EXAMPLE 7

Methylaluminoxane (MAO) from Examples 1 through 6 was used in the polymerization of ethylene. Toluene (300 milliliters) was charged to a 420 milliliter glass reactor which had been heated and purged with ethylene. The system was heated to 85 ° C and the toluene solution of aluminoxane was then added (4.9 mmoles Al). After 1 minute of stirring, a freshly prepared solution of (bis(cyclopentadienyl)-zirconium dichloride) $Cp_2ZrCl_2$ containing 6 x $10^{-3}$ moles of $Cp_2ZrCl_2$ was added. The reactor was then pressurized to 45 psig and its contents were warmed to 90 ° C. Polymerization was conducted for 0.5 hour (unless viscosity increased to a point were stirring was not possible) and was terminated by destroying the catalyst with methanol. Results are summarized in Table I.

TABLE I

| Ethylene Polymerization Results | | | | | |
|---|---|---|---|---|---|
| MAO from exp. No. | Al mmole | Temp (°C)[a] | Pressure (atm) | Time (min) | Zr-based Activity gPE/(gZr/atm/hr)x10$^6$ |
| 1 | 4.9 | 90 | 3.06 | 31 | 1.09 |
| 1[b] | 4.9[c] | 90 | 3.06 | 29 | 1.60 |
| 2 | 4.8 | 90 | 3.06 | 30 | 1.16 |
| 3 | 4.8 | 90 | 3.06 | 25 | 1.53 |
| 3[d] | 4.8 | 91 | 3.13 | 23 | 1.67 |
| 4 | 4.8 | 90 | 3.19 | 26 | 1.09 |
| 5 | 4.5 | 91 | 3.19 | 13 | 2.51 |
| 5[d] | 4.9 | 91 | 3.19 | 13 | 2.40 |
| 6 | 4.9 | 90 | 3.19 | 30 | 0.81 |

[a] Temperature of polymerization was controlled to ± 1 °C.
[b] Entire slurry with suspended solids.
[c] Includes soluble aluminum only.
[d] Solid aluminoxane after solvent evaporation.

## Claims

1. A process for the formation of aluminoxanes which comprises mixing an organoaluminum compound with an inert, porous absorbent containing water so that the water, when released by the absorbent, reacts with the organoaluminum compound forming the aluminoxane.

2. A process as claimed in Claim 1 wherein the absorbent is silica or aluminum hydroxide.

European Patent Office

# EUROPEAN SEARCH REPORT

Application Number

EP 88 20 2263

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
| --- | --- | --- | --- |
| X | DE-A-3 240 382 (HOECHST)<br>* Claims; page 6, lines 10-24 *<br>--- | 1,2 | C 07 F 5/06<br>C 08 F 4/60<br>C 08 F 10/00 |
| X | EP-A-0 170 059 (HOECHST)<br>* Claim *<br>----- | 1,2 | |

| TECHNICAL FIELDS SEARCHED (Int. Cl.4) |
| --- |
| C 07 F<br>C 08 F |

The present search report has been drawn up for all claims

| Place of search | Date of completion of the search | Examiner |
| --- | --- | --- |
| THE HAGUE | 21-02-1989 | DE ROECK R.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)